(19) Europäisches Patentamt
European Patent Office
Office européen des brevets

(11) **EP 3 775 520 B1**

(12) **EUROPEAN PATENT SPECIFICATION**

(45) Date of publication and mention
of the grant of the patent:
**04.05.2022 Bulletin 2022/18**

(21) Application number: **19724616.8**

(22) Date of filing: **12.04.2019**

(51) International Patent Classification (IPC):
**F02D 41/00** *(2006.01)*

(52) Cooperative Patent Classification (CPC):
**F02D 41/0002;** F02D 41/18; F02D 2041/1432;
F02D 2200/0406; F02D 2200/0408;
F02D 2200/0411; F02D 2200/0414;
F02D 2200/101; Y02T 10/40

(86) International application number:
**PCT/IB2019/053034**

(87) International publication number:
**WO 2019/198047 (17.10.2019 Gazette 2019/42)**

(54) **DEVICE AND CONTROL METHOD FOR A SPARK-IGNITION INTERNAL COMBUSTION ENGINE**

VORRICHTUNG UND STEUERVERFAHREN FÜR EINE FREMDGEZÜNDETE BRENNKRAFTMASCHINE

DISPOSITIF ET PROCÉDÉ DE COMMANDE D'UN MOTEUR À COMBUSTION INTERNE À ALLUMAGE COMMANDÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.04.2018 IT 201800004431**

(43) Date of publication of application:
**17.02.2021 Bulletin 2021/07**

(73) Proprietor: **FPT Industrial S.p.A.**
**10156 Torino (IT)**

(72) Inventors:
• **CARO, Marcello**
**10156 Torino (IT)**
• **AIMAR, Bruno**
**12040 Margarita (CN) (IT)**
• **BRUCATO, Aldo**
**10156 Torino (IT)**

(74) Representative: **Bongiovanni, Simone et al**
**Studio Torta S.p.A.**
**Via Viotti, 9**
**10121 Torino (IT)**

(56) References cited:
EP-A1- 1 227 233    EP-A1- 2 017 452
WO-A1-01/83970      GB-A- 2 351 563
GB-A- 2 425 188      US-A1- 2003 019 480
US-A1- 2015 128 904

**Description**

Technical field of the invention

The invention relates to the field of devices and methods to control internal combustion engines.

State of the art

Engine control systems developed according to the architecture known as "torque-based"

This implies that:

- the engine is considered as a torque actuator;
- the electronic control (hereinafter referred to as "control") of the engine receives requests for torque from the vehicle, for example from the driver, servomechanisms, the transmission, the brakes, etc...
- requests for engine revolutions are also translated, inside the control, into equivalent torque to reach the requested number of revolutions per minute.

The engine control carries out an arbitration among the different requests received according to some predetermined criteria and adjusts the supply of the engine accordingly. For example, according to a priority system or based on the value of the requested torque or equivalent torque.

In spark-ignition engines, the control adjusts the position of the butterfly valve along the intake manifold and, as a consequence, the mass of fuel to be injected into the cylinder/s according to the stoichiometric ratio.

In compression-ignition engines, the control adjusts the injection of the mass of fuel to be injected into the cylinder/s.

Drivers doe NOT directly control the delivery of the torque, but they simply make a request for the delivery of torque to the control and the latter causes the delivery of torque by the engine based on the operating conditions thereof and on the requests of all the other vehicle devices.

For a spark-ignition internal combustion engine, the following equation applies:

$$\text{Torque} = K*\text{Massa\_aria} \qquad (1)$$

wherein K is a parameter that takes into account some physical constants, among which there are the fuel properties, and also takes into account the geometric features of the internal combustion engine, among which there are the compression ratio, the number of cylinders, the number of strokes.

Furthermore, K takes into account the volumetric efficiency of the internal combustion engine, which is a function of the work point (hence, speed of rotation of the internal combustion engine and delivered torque).

Therefore, in order to reach a predetermined objective torque "Coppia_Obj", an objective air mass "Massa_aria_Obj" is needed according to the same equation (1):

$$\text{Coppia\_Obj} = K*\text{Massa\_aria\_Obj} \qquad (2)$$

In order to obtain the Massa_aria_Obj, the air flow taken into the engine must be adjusted. This flow is typically adjusted through the opening of an electric butterfly valve, setting an objective opening angle as a function of the objective air mass Massa_aria_Obj, which, in turn, is a function of said objective torque Coppia_Obj.

After this opening, the Massa_aria_Obj is trapped in the combustion chamber of the cylinders.

The Coppia_Obj is obtained through the combustion of the fuel with such Massa_aria_Obj.

In order to ensure the stoichiometry of the combustion and, hence, optimize the combustion itself and respect the regulations on polluting emissions, the injection of the fuel mass must be calculated based on the actual air mass taken in by the engine, Massa_aria_stim.

Therefore, the air mass must be measured in a precise and reliable manner.

In order to do so, an algorithm known as "speed-density" is usually used, which calculates the air mass entering the internal combustion engine from the pressure and the temperature of the air taken in and from the volumetric efficiency of the internal combustion engine corresponding to the speed of rotation of the internal combustion engine, assuming that the air flowing into the engine acts like a perfect gas.

This algorithm can be simplified by means of the following equation:

$$\text{Massa\_aria\_stim} = f(\text{Press\_aria\_Mis, Temp\_aria\_Mis,} \quad (3)$$
$$\text{Speed\_Mis})$$

Wherein Massa_aria_stim is the estimated air mass entering the internal combustion engine, Press_aria_Mis and Temp_aria_Mis are the air pressure and temperature, respectively, measured in the intake manifold and Speed_Mis \ is the measured rotation speed of the internal combustion engine.

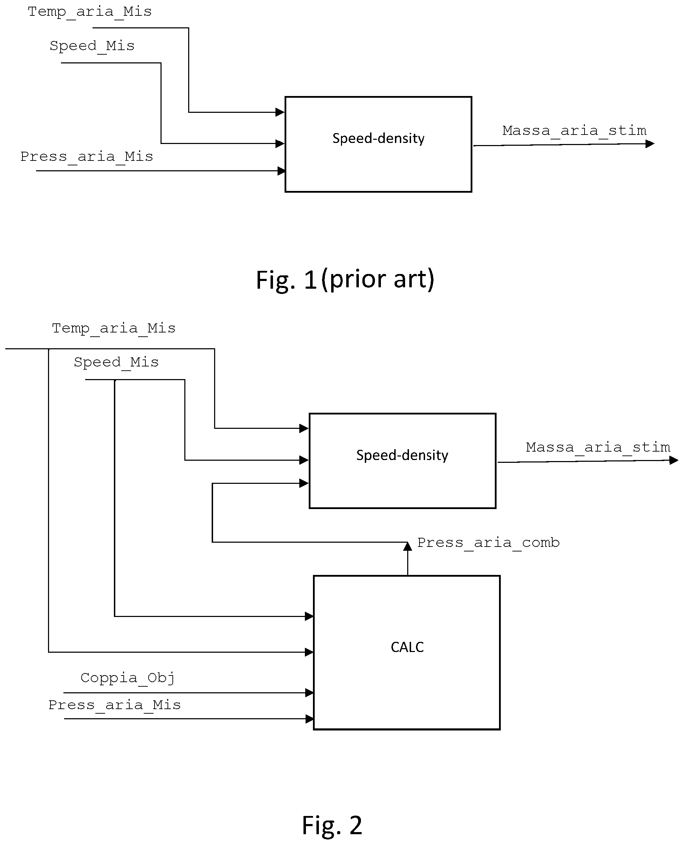

The prior-art control diagram of figure 1 is based on the aforesaid equation (3).

The estimated air mass signal Massa_aria_stim is then used as reference signal to control the opening angle of the butterfly valve and, as a consequence, the injection of fuel into the cylinders.

Preferably, the opening angle of the butterfly valve is feedback controlled based on an error between said objective angle and a measured opening angle of the same butterfly valve, by means of a relative angle sensor. Under transient conditions, the response of the air pressure sensor is slow, such that the calculation of the air mass that is actually entering the engine produces altered or misleading values.

This leads to an error in the dosage of the fuel, with a non-ideal behaviour of the internal combustion engine during transient states.

Document EP2017452 A1 discloses a method for estimating an air charge.

If not specifically excluded by the detailed description below, the information contained in this part should be considered as an integral part of the detailed description itself.

Summary of the invention

The object of the invention is to improve the engine control during transient states.

When dealing with the estimation of the measured air mass by means of the speed density algorithm, which is a function of the air pressure in the intake manifold, the basic idea of the invention is that of using, as a signal of the air pressure in the intake manifold, the sum of:

- A pressure signal actually measured in the intake manifold and previously low-pass filtered,
- A pressure signal estimated in the intake manifold and previously high-pass filtered.

The estimation of said pressure signal is obtained by means of a model, which preferably uses the same speed density algorithm, combining it with the signal of the objective torque to be delivered by the internal combustion engine. Since the method is carried out in a continuous manner, the aforesaid measured and estimated pressures are represented by respective electrical or numerical signals.

The high-pass and low-pass filtering are preferably carried out with a same cutoff frequency, so that the engine control appears continuous with an ideal behaviour of the internal combustion engine.

Indeed, the pressure estimation signal is perfectly adjoined to the measured pressure signal.

Therefore, the invention relates to a method to control a spark-ignition internal combustion engine according to the description above.

The invention also relates to a processing unit programmed to carry out the aforesaid method.

Furthermore, the invention relates to a spark-ignition internal combustion engine provided with the aforesaid processing unit, which controls the operation thereof. Moreover, the invention relates to a vehicle or fixed plant comprising the aforesaid internal combustion engine.

The claims describe preferred embodiments of the invention, thus forming an integral part of the description.

Brief description of the figures

Further objects and advantages of the invention will be best understood from the following detailed description of an embodiment thereof (and of relative variants) and from the accompanying drawings provided for merely explanatory and non-limiting purposes, wherein:

figure 1 shows a prior-art control diagram based on the speed density algorithm;
figure 2 shows the aforesaid control diagram changed according to the invention;
figures 3 shows, in detail, part of the control diagram of figure 2;
figure 4 shows an internal combustion engine provided with a processing unit programmed to implement the control diagram of figure 2.

In the figures, the same numbers and the same reference letters indicate the same elements or components.

For the purposes of the invention, the term "second" component does not imply the presence of a "first" component. As a matter of fact, these terms are only used for greater clarity and should not be interpreted in a limiting manner.

The elements and features contained in the different preferred embodiments, drawings included, can be combined with one another, without for this reason going beyond the scope of protection of this patent application, as defined by the claims.

Detailed description of embodiments

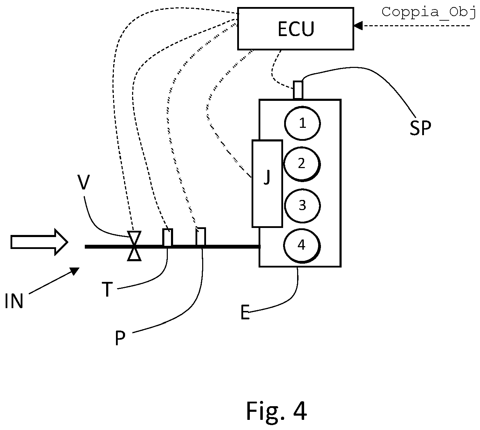

With reference to figure 4, a spark-ignition internal combustion engine E is provided with injectors J to inject fuel into at least one relative cylinder 1 - 4, with an intake manifold IN, along which a butterfly valve V is housed, with a temperature sensor T and with a pressure sensor P.

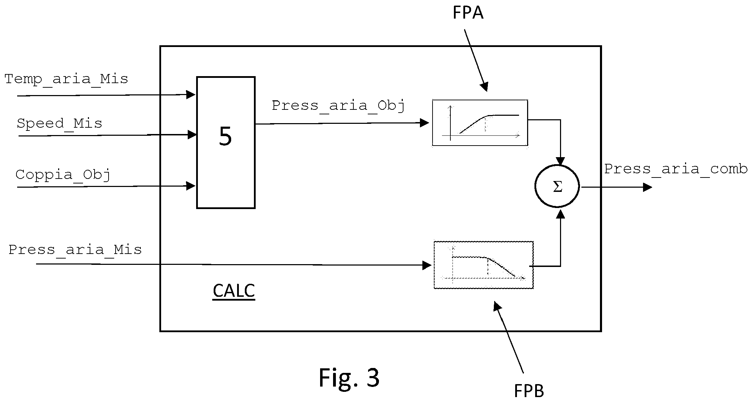

The order in which the butterfly valve V, the temperature sensor T and the pressure sensor P are arranged in figure 3 is not limiting and is provided as a mere way of example. The engine is controlled by a processing unit ECU, which comprises a static memory to steadily store instructions to be carried out.

The processing unit ECU is operatively connected to said temperature and pressure sensors so as to operate a continuous control of the internal combustion engine, in particular to control the opening of the butterfly valve V and the injection of fuel by means of the injectors J. Furthermore, an engine speed sensor SP is designed to measure said speed and is operatively connected to said processing unit.

A phonic wheel with 60 - 2 teeth is usually used, but other sensors can also be used.

According to the invention, the previous equations (1) and (2) lead to

$$\texttt{Pressione\_aria\_Obj = f(Massa\_aria\_Obj, Temp\_aria\_Mis,} \quad (4)$$
$$\texttt{Speed\_Mis)}$$

Wherein Massa_aria_Obj evidently is a function of the objective torque Coppia_Obj, such that equation (4) is an equation with one single unknown, which is Pressione_aria_Obj and can be rewritten as follows:

$$\texttt{Pressione\_aria\_Obj = f(Coppia\_Obj, Temp\_aria\_Mis,} \quad (5)$$
$$\texttt{Speed\_Mis)}$$

The symbol "f", as it is known, indicates a mathematical function known to a person skilled in the art, who is used to dealing with models of internal combustion engines.

The objective air pressure signal Pressione_aria_Obj is calculated according to equation (4) or (5) by means of block (5) of figure 3, which shows in detail the macroblock CALC of figure 2.

Said objective air pressure signal is unreliable in a steady state.

On the contrary, the measured pressure signal Press_aria_Mis in unreliable in a transient state, such that said signals are FPA high-pass filtered and FPB low-pass filtered, respectively, and added so as to generate a "combined signal" of pressure, which in figures 2 and 3 is indicated as Press_aria_comb.

The cutoff frequency preferably is the same for both the low-pass and the high-pass filtering.

Therefore, an ideal adjoining between the measured pressure signal and the objective pressure signal is obtained, i.e. calculated with equation (4).

In a processing unit ECU working with discrete time, a FPB a low-pass filtering with a predetermined cutoff frequency can be implemented and said combined pressure signal can be obtained as:

$$\texttt{Press\_aria\_comb = Pressione\_aria\_Obj -}$$
$$\texttt{FPB(Pressione\_aria\_Obj) + FPB(Pressione\_aria\_Mis).}$$

In other words, the low-frequency content allowed by the low-pass filter is subtracted from the entire spectral content of the objective pressure signal, i.e. calculated according to equation (4).

Preferably, the cutoff frequency is equal to 1/TT, wherein TT is the delay time of the pressure sensor. Said delay depends on the manufacturing features of the sensor.

The estimated air mass signal Massa_aria_comb is then used as reference signal to control the injection of fuel into the cylinders.

This invention can be advantageously carried out by means of a computer program comprising encoding means for carrying out one or more steps of the method, when the program is run on a computer.

When reading the description above, a skilled person can carry out the subject-matter of the invention without introducing further manufacturing details.

**Claims**

1. A control method implemented in a control device of a spark-ignition internal combustion engine (E) based on a calculation of an estimated mass (Massa_aria_stim) of air at the intake of the internal combustion engine, wherein said estimated mass of air is a function of:

   - a measured air temperature (Temp_aria_mis) of said air,
   - a measured rotation speed (Speed_Mis) of said internal combustion engine,
   - a pressure of said air, the method comprising a step of estimating said pressure (Press_aria_comb) of said air as a sum of:

     - - a measured pressure (Press_aria_Mis) of said air, preliminarily low-pass filtered
     - - an estimated pressure (Pressione_aria_Obj) of said air, preliminarily high-pass filtered and calculated as a function of:

       + an objective torque (Coppia_Obj) required from the internal combustion engine,
       + said measured air temperature (Temp_aria_mis)
       + said measured rotation speed (Speed_Mis).

2. The method according to claim 1, wherein said low-pass filtering and said high-pass filtering have a same cut-off frequency.

3. The method according to claim 2, wherein said cut-off frequency is calculated as the reciprocal of a delay time of a pressure sensor (P) used for measuring said measured pressure (Press_aria_Mis) of said air.

4. The method according to any one of the preceding claims comprising a step of injecting fuel into said internal combustion engine as a function of said mass of estimated air (Massa_aria_stim).

5. The method according to any one of the preceding claims, wherein an objective aperture angle of a butterfly valve (V) of said internal combustion engine is calculated as a function of said objective torque (Coppia_Obj) required from the internal combustion engine.

6. The method according to claim 5, wherein said function, that expresses said objective aperture angle of said valve, is a function of an objective air mass (Massa_aria_Obj), which in turn is a function of said objective torque (Coppia_Obj).

7. The method according to claim 6, wherein said objective aperture angle is feedback controlled based on an error between said objective angle and a measured aperture anlge of said butterfly valve, by means of a relative angular sensor.

8. The method according to any one of the preceding claims, wherein said estimated mass of air (Massa_aria_stim) at the intake of the internal combustion engine is calculated as a function of:

   - said measured temperature (Temp_aria_mis) of said air,
   - said measured rotation speed (Speed_Mis) of said internal combustion engine,
   - said pressure of said air,

   by means of a speed-density algorithm known *per sè.*

9. A control device (ECU) of a spark-ignition internal combustion engine (E),

the internal combustion engine (E) comprising

- an intake manifold (IN) for conveying air to the intake of the internal combustion engine, on the intake manifold the following being housed:

+ a butterfly valve (V),
+ a pressure sensor (P) and a temperature sensor (T) adapted to respectively measure a measured pressure (Press_aria_mis) and a measured temperature (Temp_aria_mis) of said air,

- a drive shaft, to which a speed sensor (SP) is associated to measure a measured rotation speed (Speed_Mis) of said internal combustion engine,

The control device (ECU) comprising a processing unit operatively connected to said butterfly valve (V), said pressure sensor (P), said temperature sensor (T) and said speed sensor (SP) and configured to calculate an estimated mass (Massa_aria_stim) of said air at the intake of the internal combustion engine by means of a speed density algorithm, based on:

- a measured air temperature (Temp_aria_mis) of said air,
- a measured rotation speed (Speed_Mis) of said internal combustion engine,
- a pressure of said air,

wherein said processing unit is further configured to estimate a pressure (Press_aria_comb) of said air as a sum of:

- A first signal (Press_aria_Mis), generated by said pressure sensor (P), preliminarily low-pass filtered,
- A second signal (Pressione_aria_Obj) of estimated pressure of said air, preliminarily high-pass filtered, generated as a function of:

+ a third signal (Coppia_Obj) of objective torque required from the internal combustion engine,
+ a fourth signal (Temp_aria_Mis) of measured air temperature,
+ a fifth signal (Speed_Mis) of measured rotation speed of said internal combustion engine.

**10.** The device according to claim 9, wherein said processing unit is configured to carry out all the steps of any one of the claims from 2 to 8.

**11.** A spark-ignition internal combustion engine, comprising

- an intake manifold (IN) for conveying air to the intake of the internal combustion engine, on the intake manifold the following being housed:

+ a butterfly valve (V),
+ a pressure sensor (P) and a temperature sensor (T) adapted to respectively measure a measured pressure (Press_aria_mis) and a measured temperature (Temp_aria_mis) of said air,

- a drive shaft, to which a speed sensor (SP) is associated to measure a measured rotation speed (Speed_Mis) of said internal combustion engine,
- a control device (ECU) according to claim 9 or 10.

**12.** A vehicle or fixed plant comprising the spark-ignition internal combustion engine according to claim 11.

**Patentansprüche**

**1.** Steuerverfahren, das in einer Steuereinrichtung einer fremdgezündeten Brennkraftmaschine (E) auf der Grundlage einer Berechnung einer geschätzten Luftmasse (Massa_aria_stim) beim Einlass der Brennkraftmaschine implementiert ist, wobei die geschätzte Luftmasse eine Funktion von Folgendem ist:

- einer gemessenen Lufttemperatur (Temp_aria_mis) der Luft,

- einer gemessenen Drehzahl (Speed_Mis) der Brennkraftmaschine und
- eines Luftdrucks, wobei

das Verfahren einen Schritt des Schätzens des Luftdrucks (Press_aria_comb) als eine Summe von Folgendem umfasst:

- - eines gemessenen Luftdrucks (Press_aria_Mis), der im Voraus tiefpassgefiltert worden ist, und
- - eines geschätzten Luftdrucks (Pressione_aria_Obj), der im Voraus hochpassgefiltert worden ist und als eine Funktion von Folgendem berechnet wird:

+ eines Zieldrehmoments (Coppia_Obj), das von der Brennkraftmaschine angefordert wird,
+ der gemessenen Lufttemperatur (Temp_aria_mis) und
+ der gemessenen Drehzahl (Speed_Mis).

2. Verfahren nach Anspruch 1, wobei die Tiefpassfilterung und die Hochpassfilterung dieselbe Grenzfrequenz besitzen.

3. Verfahren nach Anspruch 2, wobei die Grenzfrequenz als der Kehrwert einer Verzögerungszeit eines Drucksensors (P), der zum Messen des gemessenen Luftdrucks (Press_aria_Mis) verwendet wird, berechnet wird.

4. Verfahren nach einem der vorhergehenden Ansprüche, das einen Schritt des Einspritzens von Kraftstoff in die Brennkraftmaschine als eine Funktion der geschätzten Luftmasse (Massa_aria_stim) umfasst.

5. Verfahren nach einem der vorhergehenden Ansprüche, wobei ein Zielöffnungswinkel eines Drosselventils (V) der Brennkraftmaschine als eine Funktion des Zieldrehmoments (Coppia_Obj), das von der Brennkraftmaschine benötigt wird, berechnet wird.

6. Verfahren nach Anspruch 5, wobei die Funktion, die den Zielöffnungswinkel des Ventils ausdrückt, eine Funktion einer Zielluftmasse (Massa_aria_Obj) ist, die wiederum eine Funktion des Zieldrehmoments (Coppia_Obj) ist.

7. Verfahren nach Anspruch 6, wobei der Zielöffnungswinkel auf der Grundlage eines Fehlers zwischen dem Zielwinkel und einem gemessenen Öffnungswinkel des Drosselventils mittels eines Relativwinkelsensors rückkopplungsgesteuert ist.

8. Verfahren nach einem der vorhergehenden Ansprüche, wobei die geschätzte Luftmasse (Massa_aria_stim) am Einlass der Brennkraftmaschine als eine Funktion von Folgendem berechnet wird:

- der gemessenen Temperatur (Temp_aria_mis) der Luft,
- der gemessenen Drehzahl (Speed_Mis) der Brennkraftmaschine und
- des Luftdrucks,

mittels eines Drehzahl/Dichte-Algorithmus, der an sich bekannt ist.

9. Steuereinrichtung (ECU) einer fremdgezündeten Brennkraftmaschine (E), wobei die Brennkraftmaschine (E) Folgendes umfasst:

- einen Einlassverteiler (IN) zum Fördern von Luft zum Einlass der Brennkraftmaschine, wobei in den Einlassverteiler Folgendes aufgenommen ist:

+ ein Drosselventil (V) und
+ ein Drucksensor (P) und ein Temperatursensor (T), die ausgelegt sind, einen gemessenen Druck (Press_aria_mis) bzw. eine gemessene Temperatur (Temp_aria_mis) der Luft zu messen, und

- eine Antriebswelle, der ein Drehzahlsensor (SP) zugeordnet ist, um eine gemessene Drehzahl (Speed_Mis) der Brennkraftmaschine zu messen, wobei

die Steuereinrichtung (ECU) eine Verarbeitungseinheit umfasst, die mit dem Drosselventil (V), dem Drucksensor (P), dem Temperatursensor (T) und dem Drehzahlsensor (SP) funktionstechnisch verbunden ist und konfiguriert ist, eine geschätzte Luftmasse (Massa_aria_stim) am Einlass der Brennkraftmaschine mittels eines Drehzahl/Dichte-Algorithmus auf der Grundlage von Folgendem zu berechnen:

- einer gemessenen Lufttemperatur (Temp_aria_mis) der Luft,
- einer gemessenen Drehzahl (Speed_Mis) der Brennkraftmaschine und
- eines Luftdrucks, wobei

die Verarbeitungseinheit ferner konfiguriert ist, einen Luftdruck (Press_aria_comb) als eine Summe von Folgendem zu schätzen:

- eines ersten Signals (Press_aria_Mis), das durch den Drucksensor (P) erzeugt wird und im Voraus tiefpassgefiltert worden ist, und
- eines zweiten Signals (Pressione_aria_Obj) eines geschätzten Luftdrucks, das im Voraus hochpassgefiltert worden ist und als eine Funktion von Folgendem erzeugt wird:

+ eines dritten Signals (Coppia_Obj) eines Zieldrehmoments, das von der Brennkraftmaschine benötigt wird,
+ eines vierten Signals (Temp_aria_Mis) einer gemessenen Lufttemperatur und
+ eines fünften Signals (Speed_Mis) einer gemessenen Drehzahl der Brennkraftmaschine.

10. Vorrichtung nach Anspruch 9, wobei die Verarbeitungseinheit konfiguriert ist, alle Schritte nach einem der Ansprüche 2 bis 8 auszuführen.

11. Fremdgezündete Brennkraftmaschine, die Folgendes umfasst:

- einen Einlassverteiler (IN) zum Fördern von Luft zum Einlass der Brennkraftmaschine, wobei in den Einlassverteiler Folgendes aufgenommen ist:

+ ein Drosselventil (V) und
+ ein Drucksensor (P) und ein Temperatursensor (T), die ausgelegt sind, einen gemessenen Druck (Press_aria_mis) bzw. eine gemessenen Temperatur (Temp_aria_mis) der Luft zu messen,

- eine Antriebswelle, der ein Drehzahlsensor (SP) zugeordnet ist, um eine gemessene Drehzahl (Speed_Mis) der Brennkraftmaschine zu messen, und
- eine Steuereinrichtung (ECU) nach Anspruch 9 oder 10.

12. Fahrzeug oder ortsfeste Anlage, das bzw. die die fremdgezündete Brennkraftmaschine nach Anspruch 11 umfasst.

**Revendications**

1. Procédé de commande mis en œuvre dans un dispositif de commande d'un moteur à combustion interne (E) à étincelles d'après un calcul d'une masse d'air estimée (Massa_aria_stim) au niveau de l'admission du moteur à combustion interne, dans lequel ladite masse d'air estimée est fonction :

- d'une température d'air mesurée (Temp_aria_mis) dudit air,
- d'une vitesse de rotation mesurée (Speed_Mis) dudit moteur à combustion interne,
- d'une pression dudit air,
le procédé comprenant une étape d'estimation de ladite pression (Press_aria_comb) dudit air en tant que somme :

-- d'une pression mesurée (Press_aria_Mis) dudit air, ayant subi au préalable un filtrage passe-haut
-- d'une pression estimée (Pressione_aria_Obj) dudit air, ayant subi au préalable un filtrage passe-haut et calculée en fonction :

+ d'un couple objectif (Coppia_Obj) requis par le moteur à combustion interne,
+ de ladite température d'air mesurée (Temp_aria_mis)
+ de ladite vitesse de rotation mesurée (Speed_Mis).

2. Procédé selon la revendication 1, dans lequel ledit filtrage passe-bas et ledit filtrage passe-haut ont une même fréquence de coupure.

**3.** Procédé selon la revendication 2, dans lequel ladite fréquence de coupure est calculée en tant que réciproque d'un temps de retard d'un capteur de pression (P) utilisé pour mesurer ladite pression mesurée (Press_aria_Mis) dudit air.

**4.** Procédé selon l'une quelconque des revendications précédentes comprenant une étape d'injection de carburant dans ledit moteur à combustion interne en fonction de ladite masse d'air estimé (Massa_aria_stim).

**5.** Procédé selon l'une quelconque des revendications précédentes, dans lequel un angle d'ouverture objectif d'une vanne papillon (V) dudit moteur à combustion interne est calculé en fonction dudit couple objectif (Coppia_Obj) requis par le moteur à combustion interne.

**6.** Procédé selon la revendication 5, dans lequel ladite fonction, qui exprime ledit angle d'ouverture objectif de ladite vanne, est fonction d'une masse d'air objective (Massa_aria_Obj), qui quant à elle est fonction dudit couple objectif (Coppia_Obj).

**7.** Procédé selon la revendication 6, dans lequel ledit angle d'ouverture objectif est une rétroaction commandée d'après une erreur entre ledit angle objectif et un angle d'ouverture mesuré de ladite vanne papillon, au moyen d'un capteur angulaire relatif.

**8.** Procédé selon l'une quelconque des revendications précédentes, dans lequel ladite masse d'air estimée (Massa_aria_stim) au niveau de l'admission du moteur à combustion interne est calculée en fonction de :

- ladite température mesurée (Temp_aria_mis) dudit air,
- ladite vitesse de rotation mesurée (Speed_Mis) dudit moteur à combustion interne,
- ladite pression dudit air,

au moyen d'un algorithme de vitesse-densité connu en soi.

**9.** Dispositif de commande (ECU) d'un moteur à combustion interne (E) à étincelles,

le moteur à combustion interne (E) comprenant

- un collecteur d'admission (IN) pour acheminer de l'air à l'admission du moteur à combustion interne, les éléments suivants étant logés sur le collecteur d'admission :

+ une vanne papillon (V),
+ un capteur de pression (P) et un capteur de température (T) adaptés pour mesurer respectivement une pression mesurée (Press_aria_mis) et une température mesurée (Temp_aria_mis) dudit air,

- un arbre de transmission, auquel est associé un capteur de vitesse (SP) pour mesurer une vitesse de rotation mesurée (Speed_Mis) dudit moteur à combustion interne,

le dispositif de commande (ECU) comprenant une unité de traitement raccordée opérationnellement à ladite vanne papillon (V), audit capteur de pression (P), audit capteur de température (T) et audit capteur de vitesse (SP) et configurée pour calculer une masse estimée (Massa_aria_stim) dudit air au niveau de l'admission du moteur à combustion interne au moyen d'un algorithme de vitesse-densité, d'après :

- une température d'air mesurée (Temp_aria_mis) dudit air,
- une vitesse de rotation mesurée (Speed_Mis) dudit moteur à combustion interne,
- une pression dudit air,

dans lequel ladite unité de traitement est en outre configurée pour estimer une pression (Press_aria_comb) dudit air en tant que somme :

- d'un premier signal (Press_aria_Mis), généré par ledit capteur de pression (P), ayant fait l'objet au préalable d'un filtrage passe-bas,
- d'un deuxième signal (Pressione_aria_Obj) de pression estimée dudit air, ayant fait l'objet au préalable d'un filtrage passe-haut, généré en fonction :

+ d'un troisième signal (Coppia_Obj) de couple objectif requis par le moteur à combustion interne,
+ d'un quatrième signal (Temp_aria_Mis) de température d'air mesurée,
+ d'un cinquième signal (Speed_Mis) de vitesse de rotation mesurée dudit moteur à combustion interne.

10. Dispositif selon la revendication 9, dans lequel ladite unité de traitement est configurée pour réaliser toutes les étapes de l'une quelconque des revendications 2 à 8.

11. Moteur à combustion interne à étincelles, comprenant

- un collecteur d'admission (IN) pour acheminer de l'air à l'admission du moteur à combustion interne, les éléments suivants étant logés sur le collecteur d'admission :

+ une vanne papillon (V),
+ un capteur de pression (P) et un capteur de température (T) adaptés pour mesurer respectivement une pression mesurée (Press_aria_mis) et une température mesurée (Temp_aria_mis) dudit air,

- un arbre de transmission, auquel est associé un capteur de vitesse (SP) pour mesurer une vitesse de rotation mesurée (Speed_Mis) dudit moteur à combustion interne,
- un dispositif de commande (ECU) selon la revendication 9 ou 10.

12. Véhicule, ou installation fixe, comprenant le moteur à combustion interne à étincelles selon la revendication 11.

Temp_aria_Mis

Speed_Mis

Press_aria_Mis

Speed-density

Massa_aria_stim

## Fig. 1(prior art)

Temp_aria_Mis

Speed_Mis

Speed-density

Massa_aria_stim

Press_aria_comb

CALC

Coppia_Obj

Press_aria_Mis

## Fig. 2

Fig. 3

Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2017452 A1